# EUROPÄISCHE PATENTSCHRIFT

(11) **EP 3 980 811 B1**
(45) Veröffentlichungstag und Bekanntmachung des Hinweises auf die Patenterteilung: **07.10.2026**
(21) Anmeldenummer: 20703139.4
(22) Anmeldetag: 29.01.2020
(51) Int. Cl.: G01S 17/931, G01S 17/04

(54) **VERFAHREN UND ANLAGE ZUR DURCHFÜHRUNG EINES VERFAHRENS ZUM BETREIBEN EINER ANLAGE, WELCHE EIN ERSTES UND EIN ZWEITES, AUF EINER VERFAHREBENE BEWEGBARES MOBILTEIL AUFWEIST**
METHOD AND SYSTEM FOR CARRYING OUT A METHOD FOR OPERATING A SYSTEM, WHICH HAS A FIRST AND A SECOND MOBILE PART MOVABLE ON A TRAVEL PLANE
PROCÉDÉ ET INSTALLATION POUR METTRE EN OEUVRE UN PROCÉDÉ POUR FAIRE FONCTIONNER UNE INSTALLATION COMPRENANT UNE PREMIÈRE ET UNE DEUXIÈME PARTIE MOBILE DÉPLAÇABLES DANS UN PLAN DE DÉPLACEMENT

(30) Priorität: 12.02.2019 DE 102019000983
(43) Veröffentlichungstag der Anmeldung: 13.04.2022
(73) Patentinhaber: SEW-EURODRIVE GmbH & Co. KG, 76646 Bruchsal (DE)
(72) Erfinder: EPP, Mario, 69245 Bammental (DE); NEUMAHR, Christian, 67433 Neustadt an der Weinstraße (DE)
(86) Internationale Anmeldenummer: PCT/EP2020/025038
(87) Internationale Veröffentlichungsnummer: WO 2020/164798

(56) Entgegenhaltungen:
- EP-A1- 3 401 702
- EP-A1- 3 418 846
- EP-A2- 1 788 467
- DE-A1- 102010 013 647

## Beschreibung

Die Erfindung betrifft ein Verfahren und eine Anlage zur Durchführung eines Verfahrens zum Betreiben einer Anlage, welche ein erstes und ein zweites, auf einer Verfahrebene bewegbares Mobilteil aufweist.

Es ist allgemein bekannt, dass ein Mobilteil auf einer Verfahrebene einer Anlage bewegbar ist.

**Aus der** DE 103 13 194 A1 **ist eine optoelektronische Vorrichtung und ein Verfahren zur Erfassung von Objekten mittels eines optischen Sensors bekannt.**

**Aus der** DE 20 2014 105 004 U1 **ist ein Sicherheitssystem bekannt.**

**Aus der** DE 10 2017 006 684 A1 **ist ein Verfahren zur Positionserfassung bekannt.**

**Aus der** EP 1 788 467 A2 **ist als nächstliegender Stand der Technik eine Schutzeinrichtung bekannt.**

**Aus der** DE 10 2010 013647 A1 **ist ein Kolonnenfahrzeugmanagement bekannt.**

**Aus der** EP 3 418 846 A1 **ist eine Vorrichtung zur Sicherheitssteuerung einer Maschine bekannt.**

**Aus der** EP 3 401 702 A1 **ist ein Sensorsystem bekannt.**

Der Erfindung liegt daher die Aufgabe zugrunde, ein Verfahren zum Betreiben einer Anlage weiterzubilden, wobei die Sicherheit erhöht sein soll.

Erfindungsgemäß wird die Aufgabe bei dem Verfahren nach den in Anspruch 1 und bei der Anlage nach den in Anspruch **11** angegebenen Merkmalen gelöst.

Von Vorteil ist dabei, dass die Sicherheit verbessert ist und die Anlage trotzdem effizient betreibbar ist. Denn der Mindestabstand ist derart bemessen, dass zwischen das erste und das zweite Mobilteil ein Mensch als beispielhaftes Objekt anordenbar ist. Somit ist dieser Mensch nicht gefährdet, solange das erste vom zweiten Mobilteil den Mindestabstand einhält. Wenn allerdings alle Schutzfelder von diesem Menschen abgedeckt sind, ist ein Überwachen auf Einhalten des Mindestabstands nicht ausführbar. Zumindest in diesem Fall muss das Freigabesignal weggenommen werden, so dass der Antrieb des ersten Mobilteils zum Stillstand gebracht wird. Auf diese Weise ist die Sicherheit erhöht.

Somit ist ein effizientes Ausnutzen der Anlage mit möglichst geringen Stillstandzeiten trotz hoher Sicherheit erreichbar.

Bei der erfindungsgemäßen Anlage des Anspruchs 11 ist der Überwachungssensor ein Sicherheitslaserscanner, insbesondere ein Sicherheitslaserscanner mit simultaner Schutzfeldumschaltung. Von Vorteil ist dabei, dass mehrere Schutzfelder separat überwachbar sind und somit bei Bedeckung eines oder einer geringen Anzahl von Schutzfeldern nicht unbedingt das Freigabesignal weggenommen werden muss sondern erst dann, wenn eine kritische Anzahl von Schutzfeldern oder alle den Mindestabstand unterschreiten

Bei einer vorteilhaften Ausgestaltung wird das Freigabesignal aufrechterhalten und/oder erzeugt, wenn in zumindest einem der Schutzfelder der dort bestimmte Abstandswert in einem Erwartungsbereich liegt. Von Vorteil ist dabei, dass zwischen dem ersten und zweiten Mobilteil genügend Platz für einen Menschen ist und somit keine Verletzungsgefahr droht.

Bei einer vorteilhaften Ausgestaltung ist die zweite Anzahl von Schutzfeldern eine echte Teilmenge der ersten Anzahl von Schutzfeldern. Von Vorteil ist dabei, dass das Freigabesignal weggenommen wird, wenn noch in einem oder wenigen Schutzfeldern der Mindestabstand unterschritten wird. Somit ist die Sicherheit verbessert.

**Erfindungsgemäß** ist das nächstangeordnete Objekt das zweite Mobilteil. Bei einer weiteren vorteilhaften Ausgestaltung ist das nächstangeordnete Objekt ein anderes Objekt. Von Vorteil ist dabei, dass für jedes Schutzfeld stets ein Abstandswert bestimmt wird. Wenn dieser so bestimmte Abstandswert größer als der Mindestabstand ist, ist sichergestellt, dass das Schutzfeld bis zum Mindestabstands unbefüllt ist.

**Erfindungsgemäß** erfasst das zweite Mobilteil seine Position in der Anlage, insbesondere mittels seines Positionserfassungssystems, und übermittelt, insbesondere über einen Datenübertragungskanal, an das erste Mobilteil,
wobei das erste Mobilteil seine Position in der Anlage, insbesondere mittels seines Positionserfassungssystems, erfasst und, insbesondere mittels seines Antriebs, auf eine Sollposition hinregelt, welche einen Sollabstand zum zweiten Mobilteil aufweist,
insbesondere wobei der Sollabstand größer ist als der Mindestabstand. Von Vorteil ist dabei, dass das erste Mobilteil dem zweiten Mobilteil in einem vorgegebenen Sollabstand folgt, wobei der Istabstand nur geringfügig um den Sollabstand schwankt und möglichst den Mindestabstand nicht unterschreitet. Somit ist ein effizientes Ausnutzen der Anlage mit möglichst geringen Stillstandzeiten erreichbar.

Bei einer vorteilhaften Ausgestaltung wird das zweite Mobilteil in der Anlage entlang einer Bahnkurve mit einer Geschwindigkeit bewegt. Von Vorteil ist dabei, dass das erste Mobilteil dem zweiten Mobilteil derart nachführbar ist, dass es in einem Sollabstand der vom zweiten mobilteil durchfahrenen Bahnkurve folgt. Dabei ist wichtig, dass die Querabweichung, also die seitliche Abweichung, quer zur Bahnkurve, ein zulässiges Maß nicht überschreitet. Zur sicheren Überwachung auf unzulässige Abweichung in Querrichtung ist auch der Überwachungssensor einsetzbar.

Bei einer vorteilhaften Ausgestaltung wird das Freigabesignal aufrechterhalten und/oder erzeugt, wenn in zumindest einem Schutzfeld der dort bestimmte Abstandswert in einem Erwartungsbereich liegt,
wobei der Erwartungsbereich den Sollabstand enthält und beabstandet ist vom Mindestabstandswert. Von Vorteil ist dabei, dass der Erwartungsbereich derart dimensioniert ist, dass er möglichst eng gewählt ist und beim Regeln des ersten Mobilteils auftretende Abweichungen innerhalb des Erwartungsbereichs liegen. Somit überwacht der Überwachungssensor, ob das erste Mobilteil im vorgesehenen Abstand dem zweiten Mobilteil ohne unzulässige Abweichung folgt. Hierzu reicht auch eine geringe Anzahl von nicht von einem Menschen überdeckten Schutzfelder oder gar nur ein einziges nicht von einem Menschen überdecktes Schutzfeld aus.

Bei einer vorteilhaften Ausgestaltung liegen die Schutzfelder in einer Ebene, die parallel zur Verfahrebene angeordnet ist und/oder deren Normalenrichtung parallel zur Normalenrichtung der Verfahrebene ausgerichtet ist. Von Vorteil ist dabei, dass ein ebener Überwachungsbereich vom Überwachungssensor überwacht wird. Dieser ebene Bereich ist dabei derart nahe an der Verfahrebene und/oder derart tief anordenbar, dass ein Mensch beim Durchgehen und/oder Begehen der Verfahrebene zwischen den auf der Verfahrebene bewegbaren Mobilteilen auf jeden Fall ein oder mehrere Schutzfelder bedeckt. Insbesondere ist dabei die Verfahrebene unterhalb dieses ebenen Bereichs, also der Ebene, in welcher die Schutzfelder liegen.

Bei einer vorteilhaften Ausgestaltung weist jedes Schutzfeld einen Umfangswinkelbereich auf bezogen auf die mathematische Achse, welche parallel zur Normalenrichtung der Verfahrebene ist und durch den Überwachungssensor führt. Von Vorteil ist dabei, dass der Überwachungsbereich fächerartig aus den Schutzfeldern zusammengesetzt ist und somit ein einfaches Überwachen ausführbar ist.

Bei einer vorteilhaften Ausgestaltung grenzt der Umfangswinkelbereich jedes Schutzfeldes an den Umfangswinkelbereich jedes zu ihm nächstbenachbarten Umfangswinkelbereichs ohne Überlappung. Von Vorteil ist dabei, dass der Überwachungsbereich lückenfrei ausgeführt ist.

Wichtige Merkmale bei der Anlage sind, dass der Überwachungssensor ein Sicherheitslaserscanner ist, insbesondere ein Sicherheitslaserscanner mit simultaner Schutzfeldumschaltung ist.

Von Vorteil ist dabei, dass eine hohe Sicherheit in einfacher Weise erreichbar ist und die Anlage trotzdem effizient, also mit möglichst kurzen Stillstandzeiten im Gefahrfall, betrieben wird.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist ein erfindungsgemäßes System mit Mobilteilen (1, 2) in einem ersten Zustand gezeigt.
In der Figur 2 ist das System in einem zweiten Zustand gezeigt, bei welchem ein Objekt 20 in einem Überwachungsbereich teilweise eindringt, so dass ein Weiterfahren der Mobilteile (1, 2) zugelassen wird.
In der Figur 3 ist das System in einem dritten Zustand gezeigt, bei welchem das Objekt 20 in den Überwachungsbereich vollständig eindringt, so dass ein Weiterfahren des ersten Mobilteils 1 gestoppt wird.

Wie in den Figuren dargestellt, weist ein erstes Mobilteil 1 einen Überwachungssensor 3, insbesondere Sicherheitslaserscanner, auf, mit dem ein Bereich, insbesondere Überwachungsbereich, überwacht wird, der aus Schutzfeldern 4 zusammengesetzt ist.

Zur Überwachung weist der Überwachungssensor 3 eine simultane Schutzfeldumschaltung auf.

Die Schutzfelder 4 sind vorzugsweise in einer Ebene angeordnet und sind nicht überlappend ausgeführt, sondern grenzen jeweils aneinander an.

Jedes Mobilteil (1, 2) weist ein Positionserfassungsmittel auf, so dass jedes Mobilteil (1, 2) einer vorgegebenen Bahnkurve folgt. Vorzugsweise fährt das zweite Mobilteil 2 voraus und das erste Mobilteil 1 folgt dem zweiten Mobilteil 2, wobei ein Mindestabstand D nicht unterschritten werden darf.

Vorzugsweise erfolgt das Durchfahren der Bahnkurve nach dem Master-Slave-Prinzip. Hierbei fährt das zweite Mobilteil 2 entlang der Bahnkurve mit einer vorgegebenen Geschwindigkeit und bestimmt währenddessen zeitlich wiederkehrend seine eigene Position unter Verwendung seines Positionserfassungsmittels. Diese bestimmte Position wird über einen Datenübertragungskanal an das erste Mobilteil 1 übertragen.

Auch das erste Mobilteil 1 bestimmt seine eigene Position unter Verwendung seines Positionserfassungsmittels und bestimmt damit die Relativposition zum zweiten Mobilteil 2. Ein Regler des ersten Mobilteils 1 steuert den Antrieb des ersten Mobilteils 1 derart an, dass das erste Mobilteil 1 auf einen vorgegebenen Abstand zum zweiten Mobilteil 2 hingeregelt wird.

Der Überwachungssensor 3 prüft insbesondere zeitlich wiederkehrend, ob in einem oder mehreren seiner Schutzfelder 4 ein Objekt derart detektierbar ist, dass der Mindestabstand D zum ersten Mobilteil 1 unterschritten wird.

Wenn kein Objekt in den Schutzfeldern 4 detektiert werden konnte, das näher als der Mindestabstand D zum ersten Mobilteil 1 hin angeordnet ist, erzeugt der Überwachungssensor 3 ein Freigabesignal, so dass das erste Mobilteil 1 ungehindert betrieben werden darf.

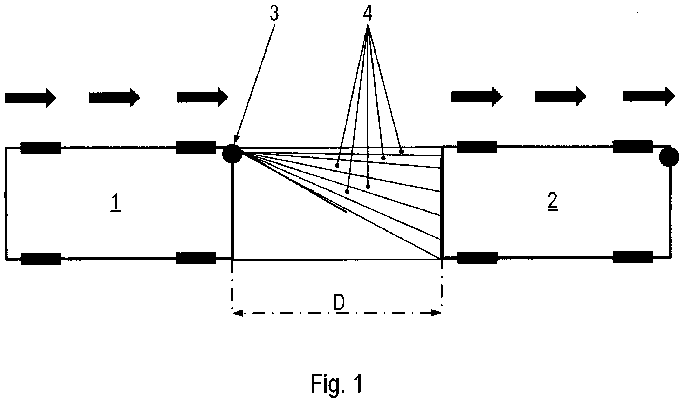

Insbesondere darf der Regler den Antrieb derart ansteuern, dass das erste Mobilteil 1 auf den vorgegebenen Abstand, insbesondere Sollabstand, hingeregelt wird. Dieser Zustand ist in Figur 1 dargestellt.

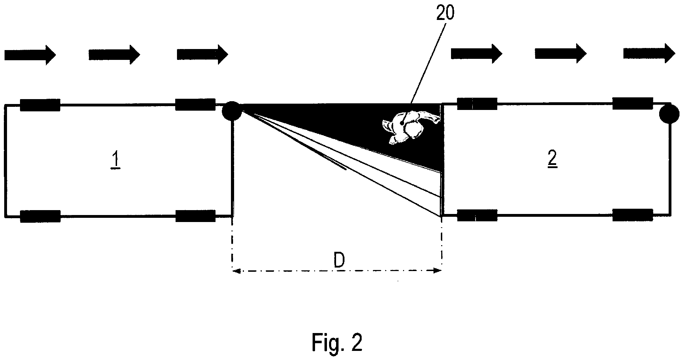

Erfindungsgemäß wird das Freigabesignal vom Überwachungssensor 3 weiter aufrechterhalten, wenn ein Objekt zwar dem ersten Mobilteil 1 näher als der Mindestabstand D ist, aber nicht in allen Schutzfeldern 4 der Mindestabstand D unterschritten ist. Dieser Zustand ist in Figur 2 dargestellt.

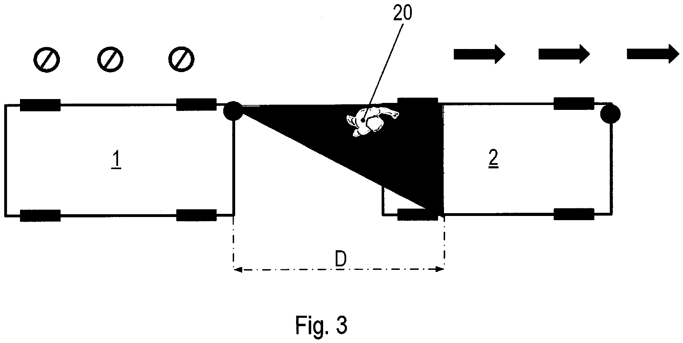

Wenn jedoch der Mindestabstand D in allen Schutzfelder 4 vom Objekt unterschritten wird, wird das Freigabesignal beendet und stattdessen ein STO-Signal gesendet, so dass das erste Mobilteil 1 einen sicheren Zustand einnimmt, insbesondere anhält. Dieser Zustand ist in Figur 3 dargestellt.

Die Schutzfelder 4 sind in einer zur Verfahrebene parallelen Ebene angeordnet und derart ausgerichtet, dass jedes Schutzfeld bis zum zweiten Mobilteil 2 ausgedehnt ist, wenn die beiden Mobilteile 1 und 2 im vorgegebenen Abstand sich entlang der Bahnkurve bewegen.

Solange also kein Objekt in die Schutzfelder 4 eindringt, detektiert der Überwachungssensor 3 in jedem Schutzfeld das zweite Mobilteil 2, so dass jedem Schutzfeld ein jeweiliger Abstandswert zwischen dem Überwachungssensor 3 und dem zweiten Mobilteil 2 zugeordnet ist.

In dem in Figur 2 dargestellten Zustand detektiert der Überwachungssensor 3 zwar das Objekt in mehreren Schutzfeldern 4, da der Mindestabstand D unterschritten ist, jedoch ist in den nicht vom Objekt bedeckten Schutzfeldern 4 ein jeweiliger Abstandswert detektiert, welcher dem zweiten Mobilteil 2 im jeweiligen Schutzfeld 4 zugeordnet ist.

Das erste Mobilteil 1 muss dem zweiten Mobilteil 2 derart folgen, dass gewährleistet ist, dass keine unzulässige seitliche Abweichung, insbesondere quer zur Bahnkurve, auftritt.

Solange also noch in einem nicht vom Objekt bedeckten Schutzfeld 4 der Abstandswert in einem Erwartungsbereich liegt, wird das Freigabesignals aufrechterhalten.

Jedes Schutzfeld 4 überdeckt einen Umfangswinkelbereich, insbesondere bezogen auf die durch den Überwachungssensor 3 durchgehende mathematisch gedachte Achse, deren Achsrichtung parallel zur Normalenrichtung der Verfahrebene der Mobilteile 1 und 2 ist.

Der Umfangswinkelbereich jedes Schutzfeldes 4 schließt sich an den Umfangswinkelbereich jedes zu ihm nächstbenachbarten Umfangswinkelbereichs ohne Überlappung an. Somit ist das durch die Schutzfelder 4 aufgespannte Gesamtschutzfeld fächerartig ausgeführt.

### Bezugszeichenliste

1 erstes Mobilteil
2 zweites Mobilteil
3 Überwachungssensor, insbesondere Sicherheitslaserscanner
4 Schutzfelder
20 Objekt, insbesondere Mensch
D Minimalabstand

## Patentansprüche

1. Verfahren zum Betreiben einer Anlage, welche ein erstes und ein zweites, auf einer Verfahrebene bewegbares Mobilteil (1, 2) aufweist,
**wobei** am ersten Mobilteil (1) ein Überwachungssensor (3) befestigt ist, welcher für eine erste Anzahl von Schutzfeldern (4) jeweils den Wert des Abstands zwischen dem Überwachungssensor (3) und einem innerhalb des Schutzfeldes zum Überwachungssensor (3) nächstangeordneten Objekt bestimmt,
wobei der Antrieb des ersten Mobilteils abhängig von einem Freigabesignal betrieben wird,
wobei:
**das zweite Mobilteil (2) seine Position in der Anlage mittels seines Positionserfassungssystems erfasst und, insbesondere über einen Datenübertragungskanal, an das erste Mobilteil (1) übermittelt,**
**wobei das erste Mobilteil (1) seine Position in der Anlage mittels seines Positionserfassungssystems erfasst und mittels seines Antriebs auf eine Sollposition hinregelt, welche einen Sollabstand zum zweiten Mobilteil (2) aufweist,**
**wobei das Freigabesignal vom Überwachungssensor (3) weiter aufrechterhalten wird, wenn nicht in der gesamten ersten Anzahl von Schutzfeldern (4) ein Mindestabstand D unterschritten wird,**
**wobei das Freigabesignal vom Überwachungssensor (3) beendet wird und stattdessen ein** Safe Torque Off, **STO-Signal**, **gesendet wird, so dass das erste Mobilteil (1) einen sicheren Zustand einnimmt, insbesondere anhält, wenn jedoch der Mindestabstand D in der gesamten Anzahl von** Schutzfeldern **(4) unterschritten wird,**
**wobei das nächstangeordnete Objekt das zweite Mobilteil (1) ist.**

2. Verfahren nach Anspruch 1,
**dadurch gekennzeichnet, dass**
der Überwachungssensor (3) ein Sicherheitslaserscanner ist, insbesondere ein Sicherheitslaserscanner mit simultaner Schutzfeldumschaltung ist.

3. Verfahren nach einem der vorangegangenen Ansprüche,
**dadurch gekennzeichnet, dass** das Freigabesignal aufrechterhalten wird oder erzeugt wird, wenn in zumindest einem Schutzfeld der dort bestimmte Abstandswert in einem Erwartungsbereich liegt.

4. Verfahren nach einem der vorangegangenen Ansprüche,
**dadurch gekennzeichnet, dass**
**der Sollabstand größer ist als der Mindestabstand.**

5. Verfahren nach einem der vorangegangenen Ansprüche,
**dadurch gekennzeichnet, dass**
das zweite Mobilteil (2) in der Anlage entlang einer Bahnkurve mit einer Geschwindigkeit bewegt wird.

6. Verfahren nach einem der vorangegangenen Ansprüche,
**dadurch gekennzeichnet, dass**
das Freigabesignal aufrechterhalten wird oder erzeugt wird, wenn in zumindest einem Schutzfeld der dort bestimmte Abstandswert in einem Erwartungsbereich liegt,
wobei der Erwartungsbereich den Sollabstand enthält und beabstandet ist vom Mindestabstandswert.

7. Verfahren nach einem der vorangegangenen Ansprüche,
**dadurch gekennzeichnet, dass**
die Schutzfelder (4) in einer Ebene liegen, die parallel zur Verfahrebene angeordnet ist und/oder deren Normalenrichtung parallel zur Normalenrichtung der Verfahrebene ausgerichtet ist.

8. Verfahren nach einem der vorangegangenen Ansprüche,
**dadurch gekennzeichnet, dass**
die Schutzfelder (4) in einer Ebene liegen, deren Normalenrichtung senkrecht zur Bewegungsrichtung der Mobilteile (1, 2) ausgerichtet ist.

9. Verfahren nach einem der vorangegangenen Ansprüche,
**dadurch gekennzeichnet, dass**
jedes Schutzfeld einen Umfangswinkelbereich aufweist bezogen auf die Umfangsrichtung um diejenige mathematische Achse und/oder Gerade herum, welche parallel zur Normalenrichtung der Verfahrebene ist und durch den Überwachungssensor (3) führt.

10. Verfahren nach einem der vorangegangenen Ansprüche,
**dadurch gekennzeichnet, dass**
der Umfangswinkelbereich jedes Schutzfeldes an den Umfangswinkelbereich jedes zu ihm nächstbenachbarten Schutzfeldes ohne Überlappung **angrenzt.**

11. Anlage zur Durchführung eines Verfahrens nach einem der vorangegangenen Ansprüche,
wobei die Anlage ein erstes und ein zweites, auf einer Verfahrebene bewegbares Mobilteil aufweist, wobei am ersten Mobilteil ein Überwachungssensor befestigt ist, wobei der Überwachungssensor so konfiguriert ist, dass er für eine erste Anzahl von Schutzfeldern jeweils den Wert des Abstands zwischen dem Überwachungssensor und einem innerhalb des Schutzfeldes zum Überwachungssensor nächstangeordneten Objekt bestimmt,
wobei die Anlage so konfiguriert ist, dass der Antrieb des ersten Mobilteils abhängig von einem Freigabesignal betrieben wird, und wobei
der Überwachungssensor (3) ein Sicherheitslaserscanner ist, insbesondere ein Sicherheitslaserscanner mit simultaner Schutzfeldumschaltung ist.

## Claims

1. A method of operating a system which has a first and a second mobile part (1, 2) movable on a travel plane,
wherein secured to the first mobile part (1) there is a monitoring sensor (3) which for a first number of protective fields (4) determines in each case the value of the distance between the monitoring sensor (3) and an object which is arranged closest to the monitoring sensor (3) within the protective field,
wherein the drive of the first mobile part is operated dependent on an enable signal, wherein the second mobile part (2) detects its position in the system, by means of its position detection system, and transmits it, in particular via a data transmission channel, to the first mobile part (1),
wherein the first mobile part (1) detects its position in the system, by means of its position detection system, and, by means of its drive, adjusts it to a desired position which is at a desired distance from the second mobile part (2),
wherein the enable signal continues to be maintained by the monitoring sensor (3) when there is not a fall below a minimum distance D in the entire first number of protective fields (4), wherein the enable signal is ended by the monitoring sensor (3) and instead a Safe Torque Off, STO signal, is transmitted so that the first mobile part (1) assumes a safe state, in particular stops, when there is however a fall below the minimum distance D in the entire number of protective fields (4),
wherein the closest-arranged object is the second mobile part (1).

2. A method according to claim 1,
**characterised in that**
the monitoring senor (3) is a safety laser scanner, in particular a safety laser scanner with simultaneous protective field switchover.

3. A method according to any one of the preceding claims,
**characterised in that**
the enable signal is maintained or generated when the distance value determined in at least one protective field lies in an expected range.

4. A method according to any one of the preceding claims,
**characterised in that**
the desired distance is greater than the minimum distance.

5. A method according to any one of the preceding claims,
**characterised in that**
the second mobile part (2) is moved in the system along a path at a speed.

6. A method according to any one of the preceding claims,
**characterised in that**
the enable signal is maintained or generated when the distance value determined in at least one protective field lies in an expected range,
wherein the expected range contains the desired distance and there is distance between the expected range and the minimum distance value.

7. A method according to any one of the preceding claims,
**characterised in that**
the protective fields (4) lie in a plane which is arranged parallel to the travel plane and/or whose normal direction is oriented parallel to the normal direction of the travel plane.

8. A method according to any one of the preceding claims,
**characterised in that**
the protective fields (4) lie in a plane whose normal direction is oriented perpendicularly to the motion direction of the mobile parts (1, 2).

9. A method according to any one of the preceding claims,
**characterised in that**
each protective field has a circumferential angular region related to the circumferential direction around that mathematical axis and/or straight line which is/are parallel to the normal direction of the travel plane and which run(s) through the monitoring sensor (3).

10. A method according to any one of the preceding claims,
**characterised in that** the circumferential angular region of each protective field adjoins without overlap the circumferential angular region of each protective field arranged closest to it.

11. A system for carrying out a method according to any one of the preceding claims,
wherein the system has a first and a second mobile part movable on a travel plane,
wherein secured to the first mobile part there is a monitoring sensor,
wherein the monitoring sensor is configured in such a manner that for a first number of protective fields it determines in each case the value of the distance between the monitoring sensor and an object which is arranged closest to the monitoring sensor within the protective field,
wherein the system is configured in such a manner that the drive of the first mobile part is operated dependent on an enable signal,
and wherein the monitoring sensor (3) is a safety laser scanner, in particular a safety laser scanner with simultaneous protective field switchover.

## Revendications

1. Procédé pour commander une installation, laquelle comprend un premier élément mobile et un second élément mobile, tous deux déplaçables sur un plan de déplacement (1, 2),
dans lequel un capteur de surveillance (3) est fixé au premier élément mobile (1), lequel pour un premier nombre de zones de protection (4) détermine respectivement la valeur de la distance entre le capteur de surveillance (3) et un objet disposé le plus proche du capteur de surveillance (3) à l'intérieur de la zone de protection,
dans lequel l'entraînement du premier élément mobile est commandé en fonction d'un signal d'activation,
dans lequel :
le second élément mobile (2) détecte sa position dans l'installation, au moyen de son système de détection de position, et, notamment via un canal de transmission de données, transmet au premier élément mobile (1),
dans lequel le premier élément mobile (1) détecte sa position dans l'installation, au moyen de son système de détection de position, et, au moyen de son entraînement, régule vers une position de consigne, laquelle présente une distance de consigne par rapport au second élément mobile (2),
dans lequel le signal d'activation du capteur de surveillance (3) est maintenu, si dans l'ensemble du premier nombre de zones de protection (4) une distance minimale D n'est pas dépassée en dessous,
dans lequel le signal d'activation du capteur de surveillance (3) est interrompu et à la place un signal STO (Safe Torque Off) est envoyé, de sorte que le premier élément mobile (1) adopte un état sûr,
notamment s'arrête, si toutefois la distance minimale D est dépassée en dessous dans l'ensemble du nombre de zones de protection (4),
dans lequel l'objet disposé le plus proche est le second élément mobile (1).

2. Procédé selon la revendication 1, **caractérisé en ce que** le capteur de surveillance (3) est un scanner laser de sécurité, notamment un scanner laser de sécurité avec commutation simultanée de zone de protection.

3. Procédé selon l'une des revendications précédentes, **caractérisé en ce que** le signal d'activation est maintenu ou est généré, si dans au moins une zone de protection la valeur de distance déterminée y est dans une plage d'attente.

4. Procédé selon l'une des revendications précédentes, **caractérisé en ce que** la distance de consigne est supérieure à la distance minimale.

5. Procédé selon l'une des revendications précédentes, **caractérisé en ce que** le second élément mobile (2) est déplacé dans l'installation le long d'une trajectoire avec une vitesse.

6. Procédé selon l'une des revendications précédentes, **caractérisé en ce que** le signal d'activation est maintenu ou est généré, si dans au moins une zone de protection la valeur de distance déterminée y est dans une plage d'attente,
dans lequel la plage d'attente contient la distance de consigne et est espacée de la valeur de distance minimale.

7. Procédé selon l'une des revendications précédentes, **caractérisé en ce que** les zones de protection (4) se trouvent dans un plan qui est disposé parallèlement au plan de déplacement et/ou dont la direction normale est orientée parallèlement à la direction normale du plan de déplacement.

8. Procédé selon l'une des revendications précédentes, **caractérisé en ce que** les zones de protection (4) se trouvent dans un plan dont la direction normale est orientée perpendiculaire à la direction de déplacement des éléments mobiles (1, 2).

9. Procédé selon l'une des revendications précédentes, **caractérisé en ce que** chaque zone de protection présente une plage angulaire périphérique par rapport à la direction périphérique autour de l'axe mathématique et/ou de la droite, laquelle est parallèle à la direction normale du plan de déplacement et passe par le capteur de surveillance (3).

10. Procédé selon l'une des revendications précédentes, **caractérisé en ce que** la plage angulaire périphérique de chaque zone de protection est adjacente à la plage angulaire périphérique de chaque zone de protection qui lui est la plus proche, sans chevauchement.

11. Installation pour la mise en œuvre d'un procédé selon l'une des revendications précédentes, dans laquelle l'installation comprend un premier élément mobile et un second élément mobile, tous deux déplaçables sur un plan de déplacement,
dans laquelle un capteur de surveillance est fixé au premier élément mobile,
dans laquelle le capteur de surveillance est configuré pour déterminer pour un premier nombre de zones de protection respectivement la valeur de la distance entre le capteur de surveillance et un objet disposé le plus proche du capteur de surveillance à l'intérieur de la zone de protection,
dans laquelle l'installation est configurée pour que l'entraînement du premier élément mobile soit commandé en fonction d'un signal d'activation, et dans laquelle le capteur de surveillance (3) est un scanner laser de sécurité, notamment un scanner laser de sécurité avec commutation simultanée de zone de protection.
